# EUROPÄISCHE PATENTSCHRIFT

(11) **EP 0 697 097 B1**
(45) Veröffentlichungstag und Bekanntmachung des Hinweises auf die Patenterteilung: **07.01.1998**
(21) Anmeldenummer: 94913487.8
(22) Anmeldetag: 03.05.1994
(51) Int. Cl.: G01C 23/00

(54) **VERFAHREN ZUR DARSTELLUNG VON FLUGFÜHRUNGSINFORMATIONEN**
METHOD FOR REPRESENTING FLIGHT GUIDANCE INFORMATION
METHODE DE REPRESENTATION D'INFORMATIONS DE GUIDAGE D'AVIONS

(30) Priorität: 05.05.1993 DE 4314811
(43) Veröffentlichungstag der Anmeldung: 21.02.1996
(73) Patentinhaber: VDO Luftfahrtgeräte Werk GmbH, D-60423 Frankfurt (DE)
(72) Erfinder: VON VIEBAHN, Harro, D-64342 Seeheim-Jugenheim (DE); BELOW, Christian, D-60435 Frankfurt am Main (DE); LINDENBERG, Kai, D-64285 Darmstadt (DE)
(74) Vertreter: Gornott, Dietmar, Dipl.-Ing.
(86) Internationale Anmeldenummer: DE9400489
(87) Internationale Veröffentlichungsnummer: WO9425827

(56) Entgegenhaltungen:
- EP-A- 0 396 071
- EP-A- 0 418 558
- DE-B- 1 196 872
- GB-A- 2 107 059
- US-A- 5 181 028

## Beschreibung

Die Erfindung betrifft ein Verfahren zur Darstellung von Flugführungsinformationen eines Flugzeugs, wobei mit Hilfe einer Bildwiedergabeeinrichtung eine räumliche Darstellung des Flugraumes mit mindestens einem Horizont und der vorausberechneten Flugbahn des Flugzeugs erfolgt.

Ein solches Verfahren ist durch die deutsche Patentanmeldung DE 39 30 862 A1 der Anmelderin bekanntgeworden. Es verbessert den Prozeß der Informationsvermittlung durch ein den natürlichen Sehgewohnheiten nachempfundenes Bild, so daß auch die mentale Belastung des Piloten verringert wird. Ferner stellt die verwendete Symbolik eine integrale Information dar, die die Kontrolle von Lage und Bewegung im Raum und das Einhalten von Flugbahnvorgaben und Kurzzeitnavigation ermöglicht. Die qualitativen Informationen treten bedingt durch die Darstellungsweise in den Vordergrund und werden durch die notwendigen quantitativen Anzeigen ergänzt. Eine Erleichterung der Aufgabe des Piloten wird durch eine Zusammenfassung der einzelnen für die Flugphase relevanten Informationen in einem ergonomisch günstig gestalteten Gesamtbild erreicht.

Ferner ermöglicht das bekannte Verfahren eine vorausschauende Steuerung des Flugzeugs, wobei die Folgen einer Steuereingabe direkt erkennbar sind. Mögliche unerwünschte Entwicklungen - beispielsweise ein Überziehen beim Start - können erkannt und vermieden werden, bevor sie tatsächlich eintreten. Die Zeit für Reaktionen des Piloten wird verlängert und die Sicherheit dadurch erhöht.

Weitere Bemühungen zur Erhöhung der Flugsicherheit bestehen darin, daß in der Luft befindliche Flugzeuge ihre Position und ihren Kurs per Funk aussenden, so daß andere Flugzeuge diese Informationen empfangen können. Bei dem bekannten Verfahren ist deshalb ferner vorgesehen, die voraussichtliche Flugbahn eines weiteren Flugzeugs durch mehrere Symbole einzublenden. Dieses setzt einerseits voraus, daß das weitere Flugzeug mit einem Gerät ausgerüstet ist, das die voraussichtliche Flugbahn wie das eigene Flugzeug gemäß D1 berechnet. Andererseits ist bei dem bekannten Verfahren ein Symbol, welches das weitere Flugzeug selbst anzeigt, nicht vorgesehen. Außerdem ist eine Vorausberechnung der Flugbahn nur für eine relativ kurze Zeit bzw. einen entsprechenden Weg mit einiger Sicherheit möglich. Befindet sich jedoch das weitere Flugzeug relativ weit weg, so ist nicht nur seine perspektivisch richtige Darstellung sehr klein, sondern auch diejenige dieser kurzen vorausberechneten Flugbahn.

Aus US 5,181,028 und EP 0 396 071 A2 sind zwar Darstellungen von anderen Flugzeugen und von Bedrohungen durch Symbole bekannt. Deren Größe wird dabei jedoch nicht von der Position des anderen Flugzeugs im realen Raum bestimmt.

Aufgabe der vorliegenden Erfindung ist es, die diesbezüglichen Informationen in einer Weise darzustellen, daß der Pilot sofort die Position und den Kurs der weiteren Flugzeuge auch bei kleinerer Darstellung der Symbole der weiteren Flugzeuge auf dem Bildschirm erkennt.

Diese Aufgabe wird erfindungsgemäß dadurch gelöst, Mittel zur Übertragung der Position eines oder mehrerer weiterer Flugzeuge vorgesehen sind und daß diese Flugzeuge darstellende Symbole in die Darstellung des Flugraums eingeblendet werden, wobei die weiteren Flugzeuge jeweils mit einem Symbol entsprechend ihrer Position im Flugraum und mit mindestens einem Streifen dargestellt sind, und daß der mindestens eine Streifen beim Symbol des weiteren Flugzeugs beginnt, entsprechend dem Kurs des weiteren Flugzeugs ausgerichtet ist und aus der Sicht des einen Flugzeugs perspektivisch dargestellt ist.

Durch das erfindungsgemäße Verfahren können Position und Kurs eines weiteren Flugzeugs auch dann sicher erkannt werden, wenn sich das weitere Flugzeug in größerer Entfernung befindet, das Symbol selbst also auf dem Bildschirm klein dargestellt ist. Bei einer Weiterbildung der Erfindung ist vorgesehen, daß der mindestens eine Streifen eine vorgegebene Länge aufweist, wobei vorzugsweise der mindestens eine Streifen transparent dargestellt ist.

Die Länge der Streifen kann beispielsweise 5 km bis 10 km betragen. Die Ausrichtung der Streifen kann sowohl nach dem Steuerkurs als auch nach dem Kurs über Grund erfolgen - je nachdem, was vom weiteren Flugzeug übertragen wird. Da an sich von Interesse ist, wohin das weitere Flugzeug voraussichtlich fliegt, dürfte eine Ausrichtung nach dem Kurs über Grund vorzuziehen sein.

Selbst auf dem Bildschirm noch nicht sichtbare Flugzeuge werden gemäß einer anderen Weiterbildung der Erfindung dadurch angezeigt, daß der mindestens eine Streifen auch dargestellt ist, wenn sich der Streifen, nicht jedoch das zugehörige weitere Flugzeug im dargestellten Flugraum befindet.

Ein besonders sicheres Erkennen von Kurs und Position wird dadurch möglich, daß je weiterem Flugzeug zwei Streifen dargestellt sind, die vom Symbol des weiteren Flugzeugs in jeweils einem spitzen Winkel nach oben und nach unten ausgehen. Ein brauchbarer Winkel zwischen dem oberen und unteren Streifen beträgt beispielsweise 5°.

Bei einer anderen Weiterbildung des erfindungsgemäßen Verfahrens, bei der ferner numerische Anzeigen des Nickwinkels eingeblendet sind, wobei die numerischen Anzeigen, vorzugsweise zwei, in einer gedachten Verlängerung der Ebene des Flugzeugs dargestellt sind, ist vorgesehen, daß die Anzeigen transparent sind. Vorzugsweise ist dabei vorgesehen, daß die Anzeigen Ziffern innerhalb eines Rahmens sind, wobei der jeweilige Hintergrund (Himmel, Boden) in dem nicht von den Ziffern bedeckten Teil des Rahmens sichtbar ist.

Durch diese Weiterbildung wird ein Übergang vom positiven auf einen negativen Nickwinkel und umgekehrt dadurch besonders deutlich angezeigt, daß dann die den Nickwinkel anzeigende Markierung auch ihre unmittelbare Hintergrundfarbe ändert - nämlich von der Farbe des Himmels zur Farbe des Bodens.

Bei einer anderen Weiterbildung der Erfindung ist vorgesehen, daß die Fläche über dem Horizont, die vorzugsweise blau dargestellt ist, in Streifen verschiedener Farbtöne unterteilt ist, die parallel zum Horizont verlaufen, und daß jeder Streifen einem vorgegebenen Nickwinkel entspricht. Dabei hat es sich als vorteilhaft herausgestellt, wenn der vorgegebene Nickwinkel 10° beträgt. Durch diese Ausführungform der Erfindung wird die Rollage des Flugzeugs auch bei großen Nickwinkeln angezeigt, wenn nämlich der Boden bzw. der Horizont auf dem Bildschirm nicht mehr bzw. nur teilweise sichtbar sind. Außerdem vermittelt die Farbänderung eine weitere Information zur Größe des Nickwinkels. Dieses wird insbesondere bei einer anderen Weiterbildung der Ausführungsform deutlich, bei welcher oberhalb eines vorgegebenen maximalen Nickwinkels eine Warnfarbe erscheint. Durch diese Weiterbildung erfolgt eine deutliche Warnung vor dem Überziehen des Flugzeugs.

Die Erfindung läßt zahlreiche Ausführungsformen zu. Einige davon sind schematisch in der Zeichnung anhand mehrerer Figuren dargestellt und nachfolgend beschrieben.

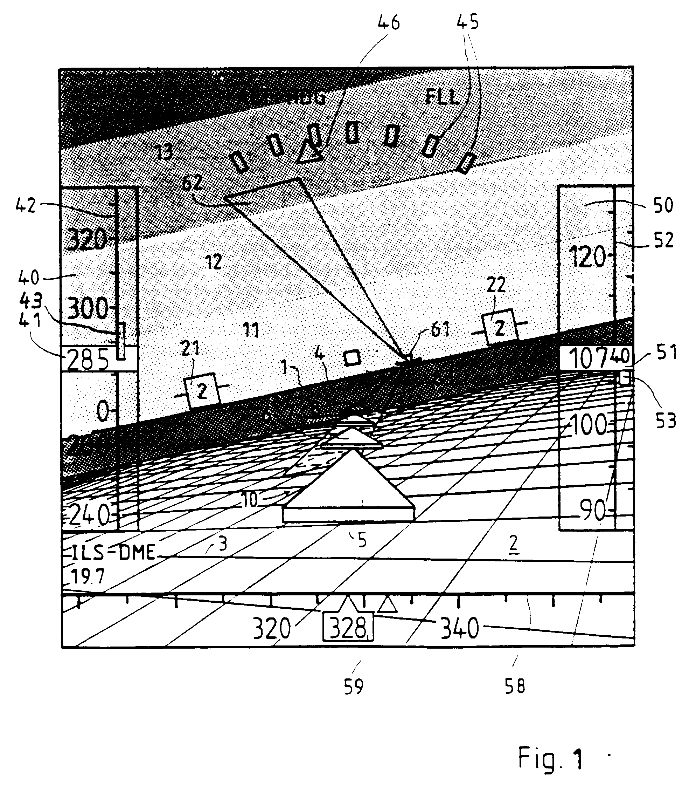

Die Figuren 1 bis 3 zeigen Schirmbilder in verschiedenen Flugsituationen zur Erläuterung des erfindungsgemäßen Verfahrens. Einrichtungen zur Durchführung des eingangs genannten bekannten Verfahrens sind bereits in der eingangs genannten Patentanmeldung erläutert. Da diese Einrichtungen auch zur Durchführung des erfindungsgemäßen Verfahrens geeignet sind, wird auf eine weitere Erläuterung im Rahmen dieser Anmeldung verzichtet.

Das Schirmbild ist vorzugsweise farbig. In den Figuren 1 bis 3 sind jedoch die Schirmbilder entsprechend den patentamtlichen Vorschriften als einfarbige Zeichnungen wiedergegeben. Sind bei der Erfindung Flächen in verschiedenen Farbtönen von besonderer Bedeutung, sind diese als verschieden dichte Punktraster dargestellt.

Fig. 1 zeigt ein Schirmbild, während das Flugzeug mit einer Rechtsneigung fliegt. Dementsprechend weist der Horizont 1 eine Schräglage auf. Der Boden (Erdoberfläche) 2 ist in dem dargestellten Beispiel eben und von einem Gitter 3 überzogen, das in Nord-Süd-Richtung, beispielsweise an den magnetischen Polen, ausgerichtet ist. Der Abstand der Gitterlinien ist vorgegeben und kann bei einer bevorzugten Ausführungsform der Erfindung zwischen einer nautischen Meile und einer geodätischen Winkelminute umgeschaltet werden.

Da bei der perspektivischen Darstellung im Bereich des Horizonts die Zahl der Gitterlinien sehr groß wird, wäre es ohne weitere Maßnahmen erforderlich, sehr viele Gitterlinien zu berechnen, die aus Gründen der Auflösung ohnehin nicht mehr dargestellt werden können. In einem Flächenbereich 4 vor dem Horizont werden deshalb keine Linien mehr berechnet und dargestellt, sondern der Flächenbereich 4 mit einer Farbe versehen, welche an den sich aus der Farbe des Bodens und aus den enger werdenden Linien des Rasters ergebenden Farbeindruck angepaßt ist.

Bei den dargestellten Ausführungsbeispielen wird die vorausberechnete Flugbahn durch dreieckförmige Scheiben 5 bis 8 dargestellt. Dabei stellen die einzelnen Scheiben 5 bis 8 jeweils die vorausberechnete Position, die Höhe, den Kurs und die Lage des Flugzeugs dar. Die Summe der scheibenförmigen Symbole 5 bis 8, also der gesamte dargestellte Teil der vorausberechneten Flugbahn, wird im folgenden Prädiktor 10 genannt.

Zusätzlich zu den genannten Informationen erhält der Pilot einen Eindruck über die Geschwindigkeit dadurch, daß die Ausdehnung der einzelnen Symbole 5 bis 8 in Flugrichtung und damit die gesamte Länge des Prädiktors von der Geschwindigkeit abhängt. Eine weitere Geschwindigkeitsinformation wird durch die Farbe derart vermittelt, daß in einem unkritischen Geschwindigkeitsbereich die Oberflächen der Symbole eine erste Farbe, beispielsweise Grün, aufweisen, während bei Annäherung an unzulässig hohe oder unzulässig niedrige Geschwindigkeiten die Farbe derjenigen Symbole, für welche derartige Geschwindigkeiten vorausberechnet werden, eine entsprechende Warnfarbe, beispielsweise Rot und Orange, annehmen.

Da es für den Piloten letztlich interessant ist, wohin das Flugzeug fliegt, ist der Prädiktor 10 insgesamt nach dem vorausberechneten Kurs über Grund ausgerichtet. Da jedoch auch der Steuerkurs eine wichtige Information für den Piloten darstellt - insbesondere beim Landen mit Seitenwind -, ist das erste Symbol 5 des Prädiktors 10 nach dem Steuerkurs ausgerichtet.

Dadurch, daß die Symbole 5 bis 8 nicht als Flächen, sondern als Scheiben mit einer vorgegebenen Dicke dargestellt sind, ergibt sich eine wesentliche Verbesserung des räumlichen Eindrucks. Bei einem realisierten Ausführungsbeispiel sind die sichtbaren Kanten in Dunkelgrün gehalten.

Die Darstellung des Himmels erfolgt in verschiedenen zum Horizont parallelen Streifen mit jeweils unterschiedlichem Farbton. Dabei entspricht die Höhe eines Streifens jeweils einem Nickwinkel von vorzugsweise 10°. In Anlehnung an die Natur ist der Himmel Blau dargestellt, wobei ausgehend von einem blassen Hellblau am Horizont mit zunehmender Höhe das Blau dunkler bzw. intensiver wird. In den Figuren sind vier Streifen 11 bis 14 sichtbar.

Zur Anzeige des Nickwinkels sind zwei Marken 21, 22 vorgesehen, welche einerseits durch ihre Lage gegenüber dem Horizont und andererseits numerisch den Nickwinkel angeben.

Die Marken 21, 22 sind transparent, so daß durch die Marken hindurch der Hintergrund sichtbar ist. Insbesondere im Bereich kleiner Nickwinkel, wenn der Horizont 1 durch die Marken 21, 22 hindurchtritt, wird durch einen Farbumschlag innerhalb der Marken leicht ein Vorzeichenwechsel des Nickwinkels erkennbar.

Im folgenden werden auf dem Schirmbild sichtbare weitere Anzeigen erläutert, die in den Figuren 1 bis 3 sichtbar, jedoch der Übersichtlichkeit halber nur in Fig. 1 mit Bezugszeichen versehen sind. Für die Geschwindigkeit ist ein Bereich 40 am linken Rand des Bildschirms vorgesehen. Dabei wird die Geschwindigkeit im Feld 41 in Knoten numerisch angezeigt. Eine senkrecht verlaufende Skala 42 wird in Abhängigkeit von der Geschwindigkeit derart verschoben, daß die numerische Anzeige über der entsprechenden Stelle der Skala gezeigt wird. Ein Balken 43 dient als Anzeige der Geschwindigkeitstendenz, die im Falle des dargestellten Schirmbildes positiv ist.

Die im oberen Teil des Bildschirms eingeblendeten Marken 45 stellen zusammen mit einem Zeiger 46 eine Rollwinkelanzeige dar. Über dem Rollwinkelanzeiger ist eine Zeile mit alphanumerischen Zeichen vorgesehen, welche Informationen über den Autopiloten umfassen.

In einem Bereich 50 am rechten Rand des Schirmbildes werden Informationen zur Flughöhe dargestellt. Dabei wird in einem mittleren Feld 51 die jeweilige Flughöhe in Fuß numerisch angezeigt. Eine Skala 52 verläuft senkrecht scheinbar hinter dem Feld 51 und bewegt sich in Abhängigkeit von der Flughöhe derart, daß die numerische Anzeige vor der entsprechenden Stelle der Skala erscheint. Die Länge eines vom Feld 51 ausgehenden Balkens 53 stellt die Variometeranzeige dar. Im dargestellten Fall wird ein Sinken des Flugzeugs angezeigt.

Im unteren Bereich des Schirmbildes ist eine waagerecht verlaufende Skala 58 zur Kursanzeige vorgesehen. Wie bei der Höhen- und Geschwindigkeitsanzeige befindet sich auch bei dieser Skala ein feststehendes Feld 59, in welchem der Steuerkurs (Heading) numerisch angezeigt wird. Dazu wird die Skala 58 passend in waagerechter Richtung bewegt.

Bei der Situation gemäß Fig. 1 zeigt sich ein weiteres Flugzeug 61 am Horizont 1. An den Streifen 62, 63 ist erkennbar, daß das weitere Flugzeug 61 sich schräg von vorn entgegengesetzt dem eigenen Kurs nähert. Die beiden Streifen 62, 63 sind transparent ausgebildet, so daß der Himmel und der Boden hindurchscheinen. Der Prädiktor 10 liegt oberhalb des unteren Streifens 63, woraus erkennbar ist, daß das weitere Flugzeug 61 nicht allzu viel höher als das eigene fliegt. Diese Folgerung ist jedoch erst im Zusammenhang mit der vorgegebenen Länge der Streifen 62, 63 möglich.

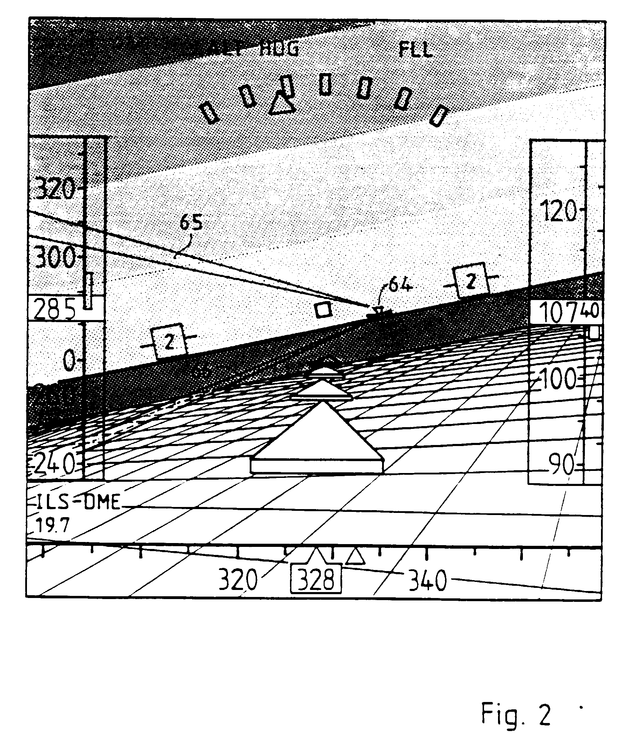

In Fig. 2 ist ein weiteres Flugzeug 64 dargestellt, das einen Kurs aufweist, der mit dem Kurs des eigenen Flugzeugs einen größeren Winkel bildet. Dieses erkennt man daran, daß die Streifen 65, 66 für den Betrachter jeweils schmäler erscheinen und einen scheinbar kleineren Winkel gegenüber dem Fall gemäß Fig. 1 einschließen. Außerdem wird das weitere Flugzeug 64 innerhalb einer kürzeren Zeit den "Blickwinkel" verlassen, als es zum Durchfliegen der durch die vorgegebene Länge der Streifen 65, 66 erforderlich ist.

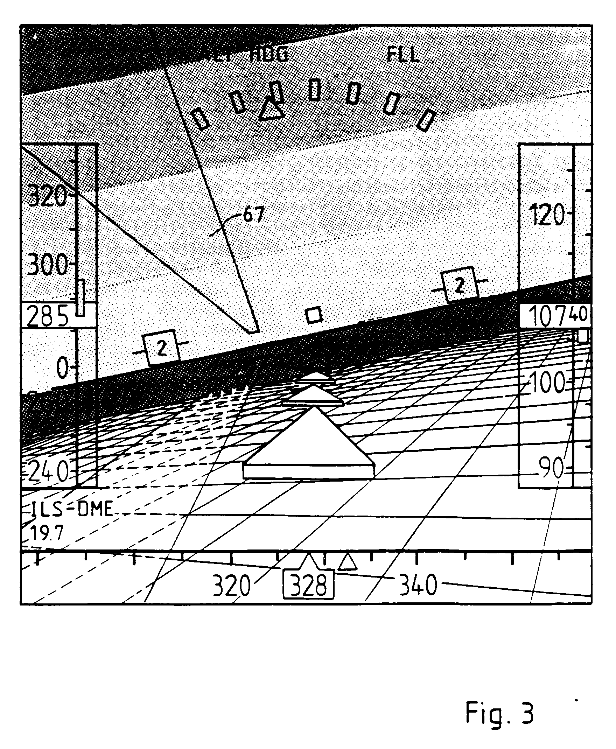

Im Falle von Fig. 3 fliegt hinter dem eigenen Flugzeug ein weiteres Flugzeug mit einem dem eigenen Kurs etwa entsprechenden Kurs, dessen Streifen 67, 68 sich in Flugrichtung nicht treffen. Wegen der räumlichen Darstellung werden sie mit zunehmender Entfernung trotzdem schmäler und nähern sich scheinbar gegenseitig.

## Patentansprüche

1. Verfahren zur Darstellung von Flugführungsinformationen eines Flugzeugs, wobei mit Hilfe einer Bildwiedergabeeinrichtung eine räumliche Darstellung des Flugraumes mit mindestens einem Horizont und der vorausberechneten Flugbahn des Flugzeugs erfolgt, dadurch gekennzeichnet, daß Mittel zur Übertragung der Position eines oder mehrerer weiterer Flugzeuge vorgesehen sind und daß diese Flugzeuge darstellende Symbole in die Darstellung des Flugraums eingeblendet werden, wobei die weiteren Flugzeuge jeweils mit einem Symbol entsprechend ihrer Position im Flugraum und mit mindestens einem Streifen dargestellt sind, und daß der mindestens eine Streifen beim Symbol des weiteren Flugzeugs beginnt, entsprechend dem Kurs des weiteren Flugzeugs ausgerichtet ist und aus der Sicht des einen Flugzeugs perspektivisch dargestellt ist.

2. Verfahren nach Anspruch 1, dadurch gekennzeichnet, daß der mindestens eine Streifen eine vorgegebene Länge aufweist.

3. Verfahren nach einem der Ansprüche 1 oder 2, dadurch gekennzeichnet, daß der mindestens eine Streifen transparent dargestellt ist.

4. Verfahren nach einem der Ansprüche 1 bis 3, dadurch gekennzeichnet, daß der mindestens eine Streifen auch dargestellt ist, wenn sich der Streifen, nicht jedoch das zugehörige weitere Flugzeug im dargestellten Flugraum befindet.

5. Verfahren nach einem der Ansprüche 1 bis 4, dadurch gekennzeichnet, daß je weiterem Flugzeug zwei Streifen dargestellt sind, die vom Symbol des weiteren Flugzeugs in jeweils einem spitzen Winkel nach oben und nach unten ausgehen.

6. Verfahren nach einem der vorhergehenden Ansprüche, dadurch gekennzeichnet, daß ferner, vorzugsweise zwei, numerische Anzeigen des Nickwinkels eingeblendet sind, die in einer gedachten Verlängerung der Ebene des Flugzeugs transparent dargestellt sind.

7. Verfahren nach Anspruch 6, dadurch gekennzeichnet, daß die Anzeigen Ziffern innerhalb eines Rahmens sind, wobei der jeweilige Hintergrund (Himmel, Boden) in dem nicht von den ziffern bedeckten Teil des Rahmens sichtbar ist.

8. Verfahren nach einem der vorhergehenden Ansprüche, dadurch gekennzeichnet, daß die Fläche über dem Horizont, die vorzugsweise blau dargestellt ist, in Streifen verschiedener Farbtöne unterteilt ist, die parallel zum Horizont verlaufen, und daß jeder Streifen einem vorgegebenen Nickwinkel entspricht.

9. Verfahren nach Anspruch 8, dadurch gekennzeichnet, daß der vorgegebene Nickwinkel 10° beträgt.

10. Verfahren nach einem der Ansprüche 8 oder 9, dadurch gekennzeichnet, daß oberhalb eines vorgegebenen maximalen Nickwinkels eine Warnfarbe erscheint.

## Claims

1. A method of representating flight guidance information of an aircraft, wherein a spacial representation of the airspace, comprising at least one horizon and the precalculated flight path of the aircraft, is effected with the aid of an image reproduction device, characterised in that means are provided for transmitting the position of one or more other aircraft and that symbols representing these aircraft are superimposed on the representation of the airspace, wherein the other aircraft are each represented by a symbol corresponding to their position in the airspace and by at least one strip, and that the at least one strip starts at the symbol for the other aircraft, is aligned corresponding to the course of the other aircraft and is displayed in perspective from the viewpoint of the first aircraft.

2. A method according to claim 1, characterised in that the at least one strip has a predetermined length.

3. A method according to either one of claims 1 or 2, characterised in that the at least one strip is displayed in transparent form.

4. A method according to any one of claims 1 to 3, characterised in that the at least one strip is also displayed when the strip, but not the associated other aircraft, is situated in the displayed airspace.

5. A method according to any one of claims 1 to 4, characterised in that two strips are displayed for each other aircraft, which strips radiate upwards and downwards zoom the symbol of the other aircraft at an acute angle in each case.

6. A method according to any one of the preceding claims, characterised in that additional, preferably two, numerical indications of the pitch angle are superimposed, and are displayed in transparent form in an imaginary extension of the plane of the aircraft.

7. A method according to claim 6, characterised in that the indications are figures inside a frame, wherein the respective background (sky, ground) is visible in the part of the frame which is not covered by the figures.

8. A method according to any one of the preceding claims, characterised in that the area above the horizon, which is preferably displayed blue, is subdivided into strips of different hue which run parallel to the horizon, and that a predetermined pitch angle corresponds to each strip.

9. A method according to claim 8, characterised in that the predetermined pitch angle is 10°.

10. A method according to either one of claims 8 or 9, characterised in that a warning colour appears above a predetermined maximum pitch angle.

## Revendications

1. Méthode de représentation d'informations de guidage d'un avion, dans laquelle, à l'aide d'un dispositif de reproduction d'image, il se fait une représentation spatiale de l'espace de vol, comportant au moins un horizon et la trajectoire de vol estimée de l'avion, caractérisée par le fait que des moyens de transmission de la position d'un ou plusieurs autres avions sont prévus et que des symboles représentant ces avions sont affichés sur la représentation de l'espace de vol, méthode dans laquelle les autres avions sont chacun représentés avec un symbole correspondant à leur position dans l'espace de vol et avec au moins une bande, et que la bande, dont il y a au moins une, commence au symbole de l'autre avion, est orientée en fonction de la direction de l'autre avion et est représentée en perspective à la vue du premier avion.

2. Méthode selon la revendication 1, caractérisée par le fait que la bande dont il y a au moins une présente une longueur prescrite.

3. Méthode selon l'une des revendications 1 ou 2, caractérisée par le fait que la bande dont il y a au moins une est représentée transparente.

4. Méthode selon l'une des revendications 1 à 3, caractérisée par le fait que la bande, dont il y a au moins une, est représentée même si la bande se trouve dans l'espace de vol représenté, mais non toutefois l'autre avion correspondant.

5. Méthode selon l'une des revendications 1 à 4, caractérisée par le fait que, pour chaque autre avion, sont représentées deux bandes qui partent du symbole de l'autre avion en formant chacune un angle aigu vers le haut et vers le bas.

6. Méthode selon l'une des revendications précédentes, caractérisée par le fait que sont affichées en outre des indications numériques, de préférence deux, de l'angle d'inclinaison horizontale qui sont représentées, transparentes, sur un prolongement imaginaire du plan de l'avion.

7. Méthode selon la revendication 6, caractérisée par le fait que les indications sont des chiffres à l'intérieur d'un cadre, l'arrière plan respectif (ciel, sol) étant visible dans la partie du cadre non recouvert par les chiffres.

8. Méthode selon l'une des revendications précédentes, caractérisée par le fait que la surface située au-dessus de l'horizon, qui de préférence est représentée en bleu, est divisée en bandes de différentes nuances qui sont orientées parallèlement à l'horizon, et que chaque bande correspond à un angle prescrit d'inclinaison longitudinale.

9. Méthode selon la revendication 8, caractérisée par le fait que l'angle prescrit d'inclinaison longitudinalee vaut 10°.

10. Méthode selon l'une des revendications 8 ou 9, caractérisée par le fait qu'au-dessus d'un angle maximal prescrit d'inclinaison longitudinale apparaît une couleur d'avertissement.
